# EUROPEAN PATENT SPECIFICATION

(11) **EP 0 832 045 B1**
(45) Date of publication and mention of the grant of the patent: **18.10.2000**
(21) Application number: 96915425.1
(22) Date of filing: 01.05.1996
(51) Int. Cl.: C03C 13/00

(54) **IRREGULARLY SHAPED GLASS FIBERS AND INSULATION THEREFROM**
IRREGULÄR GEFORMTE GLASFASERN UND ISOLATION DARAUS
FIBRES DE VERRE A FORME IRREGULIERE ET ISOLATION AVEC CES FIBRES

(30) Priority: 04.05.1995 US 434699; 29.04.1996 US 639643
(43) Date of publication of application: 01.04.1998
(73) Proprietor: OWENS CORNING, Toledo, Ohio 43659 (US)
(72) Inventor: RAPP, Charles, F., Newark, OH 43055 (US); POTTER, Russell, M., Hebron, OH 43025 (US)
(74) Representative: West, Alan Harry
(86) International application number: US9606066
(87) International publication number: WO9634837

(56) References cited:
- WO-A-95/12554
- US-A- 2 998 620
- US-A- 3 073 005
- DATABASE WPI Section Ch, Week 7425 Derwent Publications Ltd., London, GB; Class F01, AN 74-46346V XP002009170 & JP,B,49 020 924 (KANEBO LTD) , 28 May 1974

## Description

This invention relates to irregularly shaped glass fibers suitable for insulation, each glass fiber comprising two distinct glasses.

Glass fibers, mineral fibers, and other wool materials have been used for insulating buildings for some time. Insulation easily fits into the spaces in attics, ceilings, walls, floors, and the like.

Attempts have been made in the prior art to produce curly glass fibers for use as stable fibers and to produce glass fiber mats with high entanglement. Stalego, U.S. Patent No. 2,998,620 describes helical curly glass fibers produced by passing two glass compositions of differing thermal expansivity through the orifices of a spinner. The glasses are extruded in aligned integral relationship such that the fibers curl naturally upon cooling due to the differing thermal expansivity.

However, the glass compositions of U.S. 2,998,620 are not suitable for rotary forming technology. For example, in the glass pairs described, E glass is the low thermal expansion glass. In order for the fiber to form satisfactorily in the rotary process, the glass must enter the spinner at temperatures close to that at which it has a viscosity of 1000 poise. At that viscosity, E glass has a temperature near 1200°C which is high enough to cause rapid damage to the metals from which the spinners are made. This effectively prohibits the use of E glass for the extended periods necessary for commercial production. To varying degrees, similar problems exist with all of the high thermal expansion glasses described in U.S. 2,998,620.

Tiede, U.S. Patent No. 3,073,005 describes a nonrotary process for making bicomponent curly glass fibers. The fibers are made by feeding differing glass compositions to an orifice in side by side contact such that the two glasses are attenuated into a single fibers. Since U.S. 3,073,005 describes the same glass compositions as U.S. 2,998,620 it does not describe any glass compositions useful for commercial production of glass fiber products by the rotary process.

The common prior art methods for producing glass fiber insulation products involve producing glass fibers from a rotary process. A single molten glass composition is forced through the orifices in the outer wall of a centrifuge or spinner, producing primarily straight glass fibers. The fibers are drawn downward by a blower. The binder required to bond the fibers into a wool product is sprayed onto the fibers as they are drawn downward. The fibers are then collected and formed into a wool pack.

Recent developments include insulation which installs rapidly and effectively between the studs of a building. An exterior layer covers the fibrous batt. Preferably, the exterior layer covering comprises a polyethylene package which receives the fibrous batt. Another focal point of recent developments in insulation is one in which all the binder or essentially all the binder is no longer present in the fibrous batt. Evolution of processes for producing low-density insulation provide satisfactory resiliency without a binder in the batt.

Still other developments are insulations of mineral fibers which are irregular in shape. Fibers that are irregular, rather than straight, kinked, or even curly, provide a more uniform lattice structure. This uniform volume filling allows for higher recovery ratios. More importantly, uniform volume filling also results in significantly lower thermal conductivity. Also, the greater entanglement of irregularly shaped fibers provides better wool pack integrity. By sufficient integrity, it is meant that the fibers of the wool batt will remain entangled and not separate.

It is also known to form dual-glass compositions which are useful in producing irregularly shaped glass fibers by extrusion from orifices of a spinner in a rotary process. WO 95/12554 (cited herein under A54(3) and (4) EPC) describes a dual-glass comprising first and second glass compositions. The first glass composition is a high-borate, low soda lime-aluminosilicate glass having a borate content of about 14% to about 24% by weight. The second glass composition is a high-soda, low borate lime-aluminosilicate glass composition having a soda content of about 14% to about 25% by weight. Although these compositions are beneficial in the formation of dual-glass, it has been found that increasing the number of components at particular amounts in the glass results in the expansion of the compositional range and the properties possible for these glasses.

The present invention now provides a glass fiber twisted by random changes in rotation along its length (referred to herein as an "irregular" or "irregularly shaped" glass fiber) comprising two glasses of different compositions having coefficients of thermal expansion which differ by at least 4.0 ppm/°C, each glass having a log 3 viscosity temperature of 871 to 1121 °C (1600 to 2050°F) and a liquidus temperature at least 84°C (150°F) below the log 3 viscosity temperature, at least one glass composition consisting essentially of SiO₂, Al₂O₃, and Na₂O, and each glass composition including from 2.0 to 10 mole percent of BaO, SrO, K₂O, Li₂O, ZnO or TiO₂ or 1.0 to 5 mole percent Fe₂O₃.

Preferably, the glass compositions include B₂O₃, MgO or CaO.

The present invention is described below in greater detail by way of example only with reference to the accompanying drawings, in which
Figure 1 is a view of a process by which the insulation of the present invention may be produced;
Figure 2 is a view of a fiberizer by which the fibers of the present invention may be produced;
Figure 3 is a view of insulation showing entangled, irregularly shaped fibers of the invention;
Figure 4 is a cross-sectional view of an irregularly shaped fiber of the invention having a 50:50 A/B glass ratio; and
Figure 5 is a view of an irregularly shaped fiber having an A/B glass ratio of less than 50:50.

In general, insulation products comprising irregularly shaped glass fibers according to this invention can be made using suitable means and methods, such as those described and shown in U.S. Patent No. 5,431,992.

Preferably, fibers in accordance with the invention are made by the direct-forming method described in WO 95/30787. After the fibers are formed, they may be stored for shipment, e.g., to compositers (before or after chopping), or further processed as appropriate for the desired end use. For example, if the fibers are to be used to prepare insulation, they may be encapsulated, chopped, and then rolled using appropriate means known in the art.

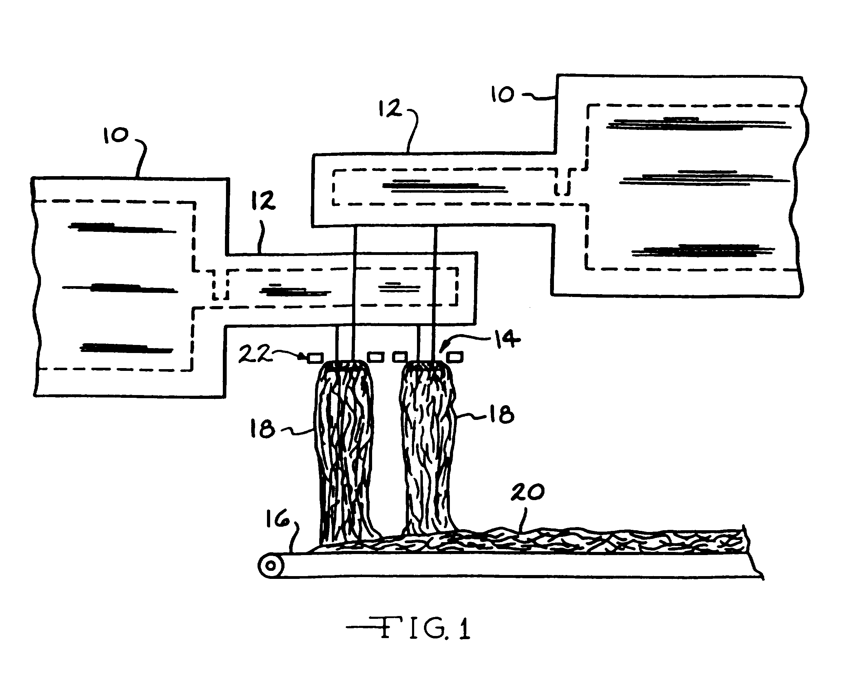

The insulation products of irregularly shaped glass fibers of the present invention can be produced from a rotary fiber-forming process as shown in Figure 1.

Referring to Figure 1, furnaces 10 supply two distinct molten glass compositions via forehearths 12 to fiberizers 14. Veils of irregularly shaped glass fibers 18 produced by the fiberizers are collected on conveyor 16 as wool pack 20 by means of a vacuum positioned beneath the conveyor. As the fibers are blown downward by air or gases to the conveyor by means of blowers 22 in the fiberizers, they are attenuated and assume their irregular shape.

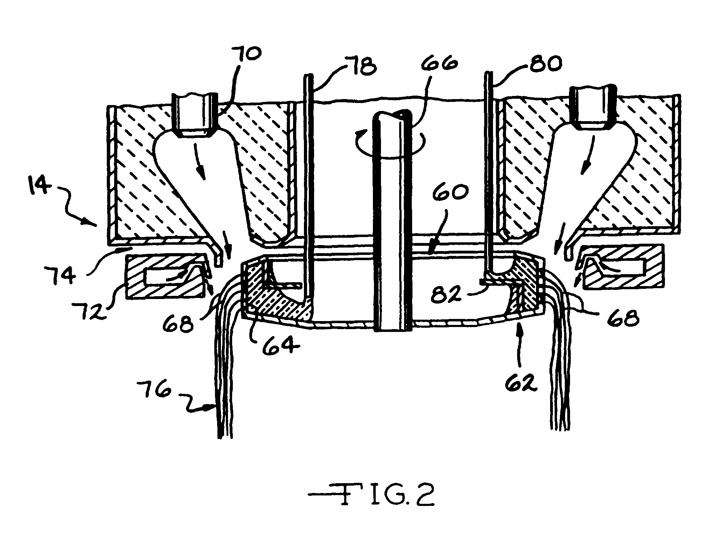

Figure 2 shows that fiberizers 14 include spinners 60. Spinner 60 is comprised of spinner bottom wall 62 and spinner peripheral wall 64. Spindle 66 rotates spinner 60. The rotation of the spinner centrifuges molten glass through the spinner peripheral wall into primary fibers 68. The primary fibers are maintained in soft, attenuable condition by the heat of annular burner 70. In one embodiment of the invention, an internal burner, not shown, provides heat to the interior of the spinner. Annular blower 72, using induced air 74, pulls the primary fibers and further attenuates them into secondary fibers 76, suitable for use in wool insulating materials. The secondary fibers, or bicomponent glass fibers, are then collected for formation into a wool pack.

The interior of the spinner is supplied with two separate streams of molten glass, first stream 78 containing glass A and second stream 80 containing glass B. The glass in stream 78 drops directly onto the spinner bottom wall and flows outwardly with centrifugal force toward the spinner peripheral wall to form a head of glass A. Glass B in molten glass stream 80 is positioned closer to the spinner peripheral wall than stream 78, and the glass in stream 80 is intercepted by horizontal flange 82 before it can reach the spinner bottom wall. Thus, a build-up or head of glass B is formed on the horizontal flange.

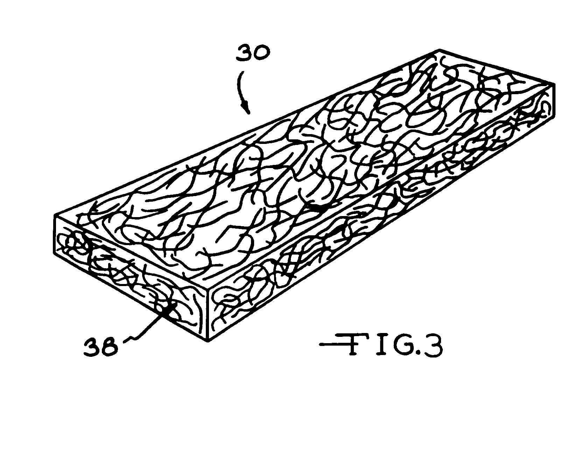

Figure 3 shows insulation product 30 comprised of entangled, irregularly shaped glass fibers 38.

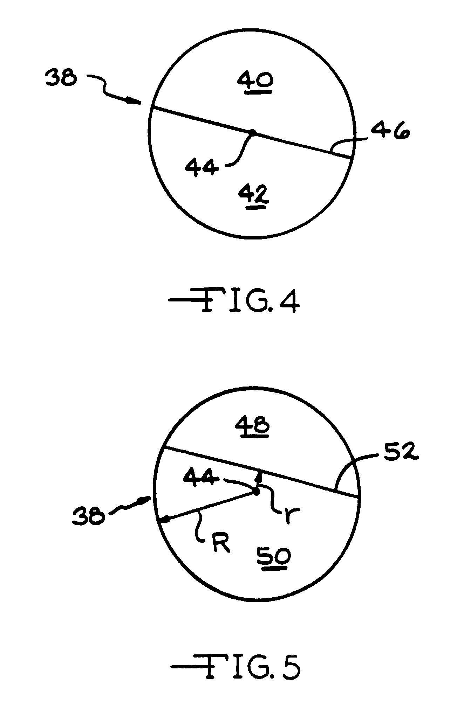

Figure 4 is a cross-sectional view of an ideal irregularly shaped glass fiber 38 having a 50:50 A/B glass ratio. Halves 40 and 42 essentially are equal in the ideal with point 44 being the center and line 46 being the diameter.

Figure 5 shows a more typical cross-section where halves 48 and 50 are not equal. Line 52 is no longer a diameter, but just a divider. Lines R and r are shown to locate center point 44.

The deviation ratio is a measure of how far the A/B glass ratio is away from 50:50. The larger the deviation from 50:50, the larger r will be as a percent of R. It has been found that the average deviation ratio of the irregularly shaped glass fibers of the invention is typically greater than about 5%, generally greater than about 15%, and in many cases, greater than about 30%.

The irregularly shaped fibers of the present invention are dual-glass fibers, i.e. each fiber is composed of two different glass compositions, glass A and glass B. If one were to make a cross-section of an ideal irregularly shaped glass fiber of the present invention, one half of the fiber would be glass A, with the other half glass B. In reality, a wide range of proportions of the amounts of glass A and glass B may exist in the various irregularly shaped glass fibers in the wool insulating material (or perhaps even over the length of an individual fibers). The percentage of glass A may vary within the range of from about 15 to about 85% of the total glass in each of the irregularly shaped glass fibers with the balance of total glass being glass B. In general, insulation products of the irregularly shaped fibers will consist of fibers of all different combinations of the percentages of glass A and glass B, including a small fraction of fibers that are single component.

Cross-section photographs of fibers are obtained by mounting a bundle of fibers in epoxy with the fibers oriented in parallel as much as possible. The epoxy plug is then cross-sectioned using a diamond saw blade, and one of the new surfaces is polished using various grinding media. The polished sample surface is then coated with a thin carbon layer to provide a conductive sample for analysis by scanning electron microscopy (SEM). The sample is then examined on the SEM using a backscattered-electron detector, which displays variations in average atomic number as a variation in the gray scale. This analysis reveals the presence of two glasses by a darker and lighter region on the cross-section of the fiber, and shows the interface of the two glasses.

Due to a continuously changing attenuation environment, each irregularly shaped fiber is twisted in a unique way. No two fibers are exactly alike. The fiber's final shape is one with a baseline curvature due to the dual-glass nature, which is modified by the twisting, irregular rotation of the plane of curvature caused by the continuously changing attenuation environment. The fiber has a baseline curvature that is twisted through three dimensions. It is generally not helical. The fiber's irregular nature allows the irregularly shaped glass fibers to stand apart from one another and achieve a uniform volume-filling nature.

While we do not wish to be limited to these, conventional glass compositions, which are suited for insulations, are the soda (or alkaline metal oxide) calcia (or alkaline earth metal oxide) aluminoborosilicate compositions. The constituents in the glass which are of main interest are: SiO₂, which is typically present in an amount of 50 to 68 percent by weight; Al₂O₃, typically present in amounts up to 9 percent by weight; B₂O₃, typically present in amounts up to 25 percent by weight; Na₂O, typically present in amounts of about 5 to 20 percent by weight; CaO, typically present in amounts of about 3 to 14 percent by weight; and MgO, typically present in amounts up to 10 percent by weight.

We found that substitutions can be made to modify the thermal expansion of glass pairs while minimizing differences in the viscosity and overall composition:
1. The molar substitutions of Li₂O for Na₂O and ZnO for CaO decrease the CTE; and
2. The molar substitutions of K₂O for Na₂O and BaO for CaO+MgO increase the CTE.

These would be in addition to modifications already being used such as the exchange of Na₂O for B₂O₃.

These substitutions were made in a series of glasses based on Na₂O-B₂O₃-MgO-CaO-SiO₂ glasses suitable for producing bicomponent glass fibers Al₂O₃. Examples of the compositions are given in the following table. Several of the compositions have the forming temperature (the temperature where the viscosity of the glass is about 1,000 poise), the liquidus temperature, and the coefficient of thermal expansion listed. Coefficients of thermal expansion were either measured between 0 and 300°C or between room temperature (21°C) and 300°C.

### Example I

Irregularly shaped glass fibers of the present invention have the following compositions.

Controls #1 and #2 are known as SiO₂-Al₂O₃-B₂O₃-Na₂O-MgO-CaO glasses which can be used to make bicomponent irregularly shaped glass fibers.

| Control, Mole % | | |
|---|---|---|
| | #1 | #2 |
| SiO₂ | 52.65 | 62.54 |
| Al₂O₃ | 4.56 | 2.35 |
| B₂O₃ | 21.85 | 5.79 |
| Li₂O | - | - |
| Na₂O | 5.35 | 14.33 |
| K₂O | - | 0.64 |
| MgO | 1.93 | 5.53 |
| CaO | 13.34 | 8.48 |
| SrO | 0.28 | 0.10 |
| BaO | - | 0.04 |
| ZnO | - | - |
| TiO₂ | 0.01 | 0.10 |
| Fe₂O₃ | 0.01 | 0.10 |
| CTE (x10⁻⁶/°C) | 6.04 | 9.17 |

| Temperature °F (°C) for: | | |
|---|---|---|
| Log n = 3.0 | 1895 (1035) | 1919 (1048) |
| Liquidus | 1657 (903) | 1730 (943) |

| Examples, Mole % | | |
|---|---|---|
| | #1 | #2 |
| Modification | BaO | BaO |
| SiO₂ | 62.54 | 65.54 |
| Al₂O₃ | 2.35 | 2.35 |
| B₂O₃ | 5.79 | 2.79 |
| Li₂O | - | - |
| Na₂O | 14.33 | 14.33 |
| K₂O | 0.64 | 0.64 |
| MgO | - | - |
| CaO | 7.01 | 7.01 |
| SrO | 0.10 | 0.10 |
| BaO | 7.04 | 7.04 |
| ZnO | - | - |
| TiO₂ | 0.10 | 0.10 |
| Fe₂O₃ | 0.10 | 0.10 |
| CTE (x10⁻⁶/°C) | 9.76 | 9.90 |

| Temperature °F (°C) for: | | |
|---|---|---|
| Log n = 3.0 | 1815 (991) | 1926 (1052) |
| Liquidus | 1544 (840) | 1520 (827) |
| Advantages of | Higher CTE; | Higher CTE: |
| Additional Component: | Lower Liquidus; | Lower Liquidus |
| | Lower Viscosity | |

| | #3 | #4* |
|---|---|---|
| Modification | BaO | BaO |
| SiO₂ | 64.38 | 62.54 |
| Al₂O₃ | 2.35 | 2.35 |
| B₂O₃ | 1.95 | 5.79 |
| Li₂O | - | - |
| Na₂O | 16.33 | 14.33 |
| K₂O | 0.64 | 0.64 |
| MgO | 3.51 | - |
| CaO | 3.51 | - |
| SrO | 0.10 | 0.10 |
| BaO | 7.02 | 14.05 |
| ZnO | - | - |
| TiO₂ | 0.10 | 0.10 |
| Fe₂O₃ | 0.10 | 0.10 |
| CTE (x10⁻⁶/°C) | 10.12 | 9.72 |

| Temperature °F (°C) for: | | |
|---|---|---|
| Log n = 3.0 | 1920 (1049) | 1785 (974) |
| Liquidus | 1427 (775) | 1774 (968) |
| Advantages of | Higher CTE; | Higher CTE: |
| Additional Component: | Lower Liquidus | Lower Viscosity |

| | | |
|---|---|---|
| *Reference example | | |

| | #5 * | #6 |
|---|---|---|
| Modification | BaO | K₂O |
| SiO₂ | 66.74 | 62.54 |
| Al₂O₃ | 2.35 | 2.35 |
| B₂O₃ | 1.59 | 5.79 |
| Li₂O | - | - |
| Na₂O | 14.33 | 7.48 |
| K₂O | 0.64 | 7.48 |
| MgO | - | 5.53 |
| CaO | - | 8.48 |
| SrO | 0.10 | 0.10 |
| BaO | 14.05 | 0.04 |
| ZnO | - | - |
| TiO₂ | 0.10 | 0.10 |
| Fe₂O₃ | 0.10 | 0.10 |
| CTE (x10⁻⁶/°C) | 10.12 | 9.57 |

| Temperature °F (°C) for: | | |
|---|---|---|
| Log n = 3.0 | 1924 (1051) | 1991 (1088) |
| Liquidus | 1857 (1014) | 1817 (992) |
| Advantages of | Higher CTE | Higher CTE: |
| Additional Component: | | Higher Viscosity |

| | | |
|---|---|---|
| *Reference example | | |

| | #7 | #8 * |
|---|---|---|
| Modification | ZnO | ZnO |
| SiO₂ | 62.54 | 62.54 |
| Al₂O₃ | 2.35 | 2.35 |
| B₂O₃ | 5.79 | 5.79 |
| Li₂O | - | - |
| Na₂O | 14.33 | 14.33 |
| K₂O | 0.64 | 0.64 |
| MgO | 3.51 | - |
| CaO | 3.51 | - |
| SrO | 0.10 | 0.10 |
| BaO | - | - |
| ZnO | 7.02 | 14.05 |
| TiO₂ | 0.10 | 0.10 |
| Fe₂O₃ | 0.10 | 0.10 |
| CTE (x10⁻⁶/°C) | 8.74 | 8.64 |

| Temperature °F (°C) for: | | |
|---|---|---|
| Log n = 3.0 | 1947 (1064) | 1966 (1074) |
| Liquidus | 1509 (821) | 1509 (821) |
| Advantages of | Lower Liquidus; | Lower Liquidus; |
| Additional Component: | Lower CTE | Lower CTE |

| | | |
|---|---|---|
| *Reference example | | |

| | #9 | #10* |
|---|---|---|
| Modification | TiO₂ | TiO₂ |
| SiO₂ | 62.54 | 62.54 |
| Al₂O₃ | 2.35 | 2.35 |
| B₂O₃ | 5.79 | 5.79 |
| Li₂O | - | - |
| Na₂O | 14.33 | 14.33 |
| K₂O | 0.64 | 0.64 |
| MgO | 3.51 | - |
| CaO | 3.51 | - |
| SrO | 0.10 | 0.10 |
| BaO | - | - |
| ZnO | - | - |
| TiO₂ | 7.12 | 14.15 |
| Fe₂O₃ | 0.10 | 0.10 |
| CTE (x10⁻⁶/°C) | 8.33 | 8.09 |

| Temperature °F (°C) for: | | |
|---|---|---|
| Log n = 3.0 | 1918 (1048) | 1893 (1034) |
| Liquidus | 1765 (963) | 1904 (1040) |
| Advantages of | Lower CTE | Lower CTE |
| Additional Component: | | |

| | | |
|---|---|---|
| *Reference example | | |

| | #11 | #12* |
|---|---|---|
| Modification | Li₂O | Li₂O+ZnO |
| SiO₂ | 62.54 | 62.54 |
| Al₂O₃ | 2.35 | 2.35 |
| B₂O₃ | 5.79 | 5.79 |
| Li₂O | 7.48 | 7.48 |
| Na₂O | 7.48 | 7.48 |
| K₂O | - | - |
| MgO | 5.53 | 3.51 |
| CaO | 8.48 | 3.51 |
| SrO | 0.10 | 0.10 |
| BaO | 0.04 | - |
| ZnO | - | 7.02 |
| TiO₂ | 0.10 | 0.10 |
| Fe₂O₃ | 0.10 | 0.10 |
| CTE (x10⁻⁶/°C) | 8.19 | 7.84 |

| Temperature °F (°C) for: | | |
|---|---|---|
| Log n = 3.0 | 1829 (998) | 1844 (1007) |
| Liquidus | 1848 (1009) | - |
| Advantages of | Lower CTE; | Lower CTE; |
| Additional Component: | Lower Viscosity | Lower Viscosity |

| | | |
|---|---|---|
| *Reference example | | |

| | #13* | #14* |
|---|---|---|
| Modification | Li₂O+TiO₂ | K₂O+BaO |
| SiO₂ | 62.54 | 55.32 |
| Al₂O₃ | 2.35 | 5.50 |
| B₂O₃ | 5.79 | 3.05 |
| Li₂O | 7.48 | - |
| Na₂O | 7.48 | 11.34 |
| K₂O | - | 11.34 |
| MgO | 3.51 | 4.33 |
| CaO | 3.51 | 4.48 |
| SrO | 0.10 | - |
| BaO | - | 4.55 |
| ZnO | - | - |
| TiO₂ | 7.12 | 0.03 |
| Fe₂O₃ | 0.10 | 0.06 |
| CTE (x10⁻⁶/°C) | 7.67 | 12.16 |

| Temperature °F (°C) for: | | |
|---|---|---|
| Log n = 3.0 | 1838 (1003) | 1904 (1040) |
| Liquidus | - | 1591 (866) |
| Advantages of | Lower CTE; | High CTE; |
| Additional Component: | Lower Viscosity | Lower Viscosity |

| | | |
|---|---|---|
| *Reference example | | |

| | #15* | #16 |
|---|---|---|
| Modification | K₂O+BaO | BaO |
| SiO₂ | 62.54 | 61.80 |
| Al₂O₃ | 2.35 | 2.60 |
| B₂O₃ | 5.79 | 1.73 |
| Li₂O | - | - |
| Na₂O | 7.48 | 18.49 |
| K₂O | 7.48 | 0.61 |
| MgO | 3.51 | 5.33 |
| CaO | 3.51 | 5.74 |
| SrO | 0.10 | - |
| BaO | 7.02 | 3.70 |
| ZnO | - | - |
| TiO₂ | 0.10 | - |
| Fe₂O₃ | 0.10 | - |
| CTE (x10⁻⁶/°C) | 9.92 | 11.53 |

| Temperature °F (°C) for: | | |
|---|---|---|
| Log n = 3.0 | 1927 (1053) | 1907 (1042) |
| Liquidus | 1348 (731) | 1511 (822) |
| Advantages of | High CTE; | High CTE: |
| Additional Component: | Lower Liquidus | Lower Liquidus |

| | | |
|---|---|---|
| *Reference example | | |

| | #17* | #18 |
|---|---|---|
| Modification | K₂O+BaO | K₂O+BaO |
| SiO₂ | 61.80 | 58.47 |
| Al₂O₃ | 2.60 | 4.40 |
| B₂O₃ | 1.73 | - |
| Li₂O | - | - |
| Na₂O | 9.55 | 21.02 |
| K₂O | 9.55 | 2.65 |
| MgO | 1.96 | 4.95 |
| CaO | 2.11 | 5.11 |
| SrO | - | - |
| BaO | 10.70 | 3.30 |
| ZnO | - | - |
| TiO₂ | - | 0.03 |
| Fe₂O₃ | - | 0.06 |
| CTE (x10⁻⁶/°C) | 12.03 | 12.16 |

| Temperature °F (°C) for: | | |
|---|---|---|
| Log n = 3.0 | 1905 (1041) | 1921 (1049) |
| Liquidus | 1564 (851) | 1779 (971) |
| Advantages of | | |
| Additional Component: | | |

| | | |
|---|---|---|
| *Reference example | | |

| | #19* | #20 |
|---|---|---|
| Modification | K₂O+BaO | Fe₂O₃ |
| SiO₂ | 53.64 | 63.10 |
| Al₂O₃ | 6.60 | 2.68 |
| B₂O₃ | 3.63 | - |
| Li₂O | - | - |
| Na₂O | 11.34 | 19.73 |
| K₂O | 11.34 | 0.20 |
| MgO | 4.33 | 3.21 |
| CaO | 4.48 | 3.71 |
| SrO | - | - |
| BaO | 4.55 | 5.30 |
| ZnO | - | 0.05 |
| TiO₂ | 0.03 | 0.51 |
| Fe₂O₃ | 0.06 | 1.45 |
| CTE (x10⁻⁶/°C) | 12.08 | - |

| Temperature °F (°C) for: | | |
|---|---|---|
| Log n = 3.0 | 1917 (1047) | 1919 (1048) |
| Liquidus | 1741 (949) | 1323 (717) |
| Advantages of | High CTE | Low Liquidus |
| Additional Component: | | |

| | | |
|---|---|---|
| *Reference example | | |

| | #21 | #22* |
|---|---|---|
| Modification | ZnO | K₂O+ZnO |
| SiO₂ | 62.00 | 55.47 |
| Al₂O₃ | 1.76 | 4.40 |
| B₂O₃ | - | 4.00 |
| Li₂O | - | - |
| Na₂O | 22.34 | 11.34 |
| K₂O | 0.44 | 11.34 |
| MgO | 4.01 | 4.01 |
| CaO | 4.68 | 4.68 |
| SrO | - | - |
| BaO | - | - |
| ZnO | 4.68 | 4.68 |
| TiO₂ | 0.03 | 0.03 |
| Fe₂O₃ | 0.06 | 0.06 |
| CTE (x10⁻⁶/°C) | 11.52 | 12.22 |

| Temperature °F (°C) for: | | |
|---|---|---|
| Log n = 3.0 | 1903 (1039) | 1894 (1034) |
| Liquidus | 1572 (856) | 1411 (766) |
| Advantages of | Low Liquidus | High CTE; |
| Additional Component: | | Lower Liquidus |

| | | |
|---|---|---|
| *Reference example | | |

| | #23 | #24 |
|---|---|---|
| Modification | K₂O+ZnO | Li₂O |
| SiO₂ | 57.34 | 58.62 |
| Al₂O₃ | 4.40 | 3.17 |
| B₂O₃ | - | 18.08 |
| Li₂O | - | 3.00 |
| Na₂O | 23.30 | 3.302 |
| K₂O | 1.50 | 0.77 |
| MgO | 4.01 | 1.61 |
| CaO | 4.68 | 11.12 |
| SrO | - | 0.24 |
| BaO | - | - |
| ZnO | 4.68 | - |
| TiO₂ | 0.03 | 0.02 |
| Fe₂O₃ | 0.06 | 0.07 |
| CTE (x10⁻⁶/°C) | 12.05 | - |

| Temperature °F (°C) for: | | |
|---|---|---|
| Log n = 3.0 | 1916 (1047) | 1909 (1043) |
| Liquidus | 1773 (967) | 1855 (1013) |
| Advantages of | High CTE | Low Viscosity |
| Additional Component: | | |

| | #25 | #26 |
|---|---|---|
| Modification | ZnO | Li₂O |
| SiO₂ | 58.62 | 61.84 |
| Al₂O₃ | 3.17 | 2.72 |
| B₂O₃ | 18.08 | 14.08 |
| Li₂O | - | 2.85 |
| Na₂O | 6.30 | 6.21 |
| K₂O | 0.77 | 0.06 |
| MgO | 1.61 | 2.20 |
| CaO | 7.12 | 9.81 |
| SrO | 0.24 | - |
| BaO | - | - |
| ZnO | 4.00 | - |
| TiO₂ | 0.02 | 0.16 |
| Fe₂O₃ | 0.07 | 0.07 |
| CTE (x10⁻⁶/°C) | - | 6.88 |

| Temperature °F (°C) for: | | |
|---|---|---|
| Log n = 3.0 | 1967(1075) | 1918(1048) |
| Liquidus | 1627(886) | 1896(1036) |
| Advantages of | Low Liquidus | Low CTE |
| Additional Component: | | |

| | #27 | #28 |
|---|---|---|
| Modification | Li₂O+ZnO | TiO₂ |
| SiO₂ | 61.84 | 61.84 |
| Al₂O₃ | 2.72 | 2.72 |
| B₂O₃ | 14.08 | 14.08 |
| Li₂O | 4.50 | - |
| Na₂O | 4.56 | 9.06 |
| K₂O | 0.06 | 0.06 |
| MgO | 2.20 | 2.20 |
| CaO | 5.81 | 5.81 |
| SrO | - | - |
| BaO | - | - |
| ZnO | 4.00 | - |
| TiO₂ | 0.16 | 4.16 |
| Fe₂O₃ | 0.07 | 0.07 |
| CTE (x10⁻⁶/°C) | 5.68 | 6.37 |

| Temperature °F (°C) for: | | |
|---|---|---|
| Log n = 3.0 | 1935 (1057) | 1972 (1078) |
| Liquidus | 1863 (1017) | 1828 (998) |
| Advantages of | Low CTE | Low CTE |
| Additional Component: | | |

| | #29 | #30* |
|---|---|---|
| Modification | Li₂O+TiO₂ | Li₂O-ZnO+TiO₂ |
| SiO₂ | 61.84 | 61.84 |
| Al₂O₃ | 2.72 | 2.72 |
| B₂O₃ | 14.08 | 14.08 |
| Li₂O | 3.00 | 4.50 |
| Na₂O | 6.06 | 4.56 |
| K₂O | 0.06 | 0.06 |
| MgO | 2.20 | 3.00 |
| CaO | 5.81 | 3.00 |
| SrO | - | - |
| BaO | - | - |
| ZnO | - | 3.00 |
| TiO₂ | 4.16 | 3.16 |
| Fe₂O₃ | 0.07 | 0.07 |
| CTE (x10⁻⁶/°C) | 6.02 | 5.45 |

| Temperature °F (°C) for: | | |
|---|---|---|
| Log n = 3.0 | 1943 (1062) | 1963 (1073) |
| Liquidus | 1843 (1006) | 1818 (992) |
| Advantages of | Low CTE | Low CTE |
| Additional Component: | | |

| | | |
|---|---|---|
| *Reference example | | |

| | #31 | #32* |
|---|---|---|
| Modification | BaO | BaO |
| SiO₂ | 58.62 | 61.51 |
| Al₂O₃ | 3.17 | 2.50 |
| B₂O₃ | 18.08 | 20.00 |
| Li₂O | - | - |
| Na₂O | 6.30 | 4.90 |
| K₂O | 0.77 | - |
| MgO | 1.61 | - |
| CaO | 6.22 | - |
| SrO | 0.24 | - |
| BaO | 4.90 | 11.00 |
| ZnO | - | - |
| TiO₂ | 0.02 | 0.02 |
| Fe₂O₃ | 0.07 | 0.07 |
| CTE (x10⁻⁶/°C) | - | 5.70 |

| Temperature °F (°C) for: | | |
|---|---|---|
| Log n = 3.0 | 1914 (1046) | 1954 (1068) |
| Liquidus | 1634 (890) | 1829 (998) |
| Advantages of | Low Liquidus | Low CTE |
| Additional Component: | | |

| | | |
|---|---|---|
| *Reference example | | |

### Reference Example II

Irregular-shaped glass fibers of the present invention were produced using the low-expansion glass Control #1 and the high-expansion glass Example #14. Fibers were produced at approximately 40 pounds (18.1 kg) per hour in a pilot scale operation. Test squares of the wool batts were then produced from 50 grams of the fibers in an 8 x 8 inch (203 x 203 mm) sample. The recovery of these test squares was measured by comparing the recovered thickness to the compressed thickness. The compression was for 15 minutes at 12 pcf (192 kg/m³).

A standard bindered insulation product of the prior art showed a recovery ratio of 18:1. Standard binderless wool insulating material of the prior art showed a recovery ratio of 14.4:1. Binderless irregularly shaped wool insulating material of the present invention showed a recovery of from 32:1 to 38:1 for three samples tested.

## Claims

1. A glass fiber (38) twisted by random changes in rotation along its length and comprising two glasses of different compositions having coefficients of thermal expansion which differ by at least 4.0 ppm/°C, each glass having a log 3 viscosity temperature of 871 to 1121°C (1600 to 2050°F) and a liquidus temperature at least 84°C (150°F) below the log 3 viscosity temperature, at least one glass composition consisting essentially of SiO₂, Al₂O₃, and Na₂O, and each glass composition including from 2.0 to 10 mole percent of BaO, SrO, K₂O, Li₂O, ZnO or TiO₂ or 1.0 to 5 mole percent Fe₂O₃.

2. A glass fiber according to claim 1, wherein the glass compositions include B₂O₃, MgO or CaO.

3. A glass fiber according to claim 1 or claim 2, wherein at least one glass composition includes K₂O and BaO.

4. A glass fiber according to claim 1 or claim 2, wherein at least one glass compostions includes BaO.

5. A glass fiber according to claim 1 or claim 2, wherein at least one glass composition includes Li₂O.

6. A glass fiber according to claim 1 or claim 2. wherein at least one glass composition includes ZnO.

7. A glass fiber according to claim 1 or claim 2, wherein at least one glass composition includes K₂O and ZnO.

8. A glass fiber according to claim 1 or claim 2, wherein at least one glass composition includes TiO₂.

9. A glass fiber according to claim 1 or claim 2, wherein at least one glass composition includes Fe₂O₃.

10. Glass fiber insulation (30) comprising a collection of glass fibers according to any one of claims 1 to 9.

## Patentansprüche

1. Glasfaser (38), die durch zufallsverteilte Rotationsänderungen über ihre Länge verdrillt ist und zwei Gläser unterschiedlicher Zusammensetzung enthält, die sich im thermischen Expansionskoeffizienten um wenigstens 4,0 ppm/°C unterscheiden, wobei jedes Glas eine log3-Viskositäts-Temperatur von 871°C bis 1121°C (1600°F bis 2050°F) und eine Liquidustemperatur von wenigsten 84°C (150°F) unterhalb der log3-Viskositäts-Temperatur aufweist, wenigstens eine Glasmasse im wesentlichen aus SiO₂, Al₂O₃ und Na₂O besteht, und jede Glasmasse 2,0 - 10 mol-% BaO, SrO, K₂O, Li₂O, ZnO oder TiO₂ oder 1,0-5 mol-% Fe₂O₃ enthält.

2. Glasfaser nach Anspruch 1, wobei die Glasmassen B₂O₃, MgO oder CaO enthalten.

3. Glasfaser nach Anspruch 1 oder 2, wobei wenigstens eine Glasmasse K₂O und BaO enthält.

4. Glasfaser nach Anspruch 1 oder 2, wobei wenigstens eine Glasmasse BaO enthält.

5. Glasfaser nach Anspruch 1 oder 2, wobei wenigstens eine Glasmasse Li₂O enthält.

6. Glasfaser nach Anspruch 1 oder 2, wobei wenigstens eine Glasmasse ZnO enthält.

7. Glasfaser nach Anspruch 1 oder 2, wobei wenigstens eine Glasmasse K₂O und ZnO enthält.

8. Glasfaser nach Anspruch 1 oder 2, wobei wenigstens eine Glasmasse TiO₂ enthält.

9. Glasfaser nach Anspruch 1 oder 2, wobei wenigstens eine Glasmasse Fe₂O₃ enthält.

10. Glasfaserisolation (30) mit einer Zusammenfassung von Glasfasern nach einem der Ansprüche 1 bis 9.

## Revendications

1. Fibre de verre (38) torsadée par des variations aléatoires de la rotation sur toute sa longueur, et comprenant deux verres de compositions différentes ayant des coefficients de dilatation thermique qui diffèrent d'au moins 4,0 ppm/°C, chaque verre ayant une température de viscosité en log 3 de 871 à 1121°C (1600 à 2050°F) et une température de liquidus d'au moins 84°C (150°F) inférieure à la température de viscosité en log 3, au moins une composition de verre consistant essentiellement en SiO₂, Al₂O₃ et Na₂O, et chaque composition de verre contenant de 2,0 à 10 % en moles de BaO, SrO, K₂O, Li₂O, ZnO ou TiO₂, ou de 1,0 à 5,0 % en moles de Fe₂O₃.

2. Fibre de verre selon la revendication 1, dans laquelle les compositions de verre comprennent du B₂O₃, du MgO ou du CaO.

3. Fibre de verre selon la revendication 1 ou 2, dans laquelle au moins une composition de verre comprend du K₂O et du BaO.

4. Fibre de verre selon la revendication 1 ou 2, dans laquelle au moins une composition de verre comprend du BaO.

5. Fibre de verre selon la revendication 1 ou 2, dans laquelle au moins une composition de verre comprend du Li₂O.

6. Fibre de verre selon la revendication 1 ou 2, dans laquelle au moins une composition de verre comprend du ZnO.

7. Fibre de verre selon la revendication 1 ou 2, dans laquelle au moins une composition de verre comprend du K₂O et du ZnO.

8. Fibre de verre selon la revendication 1 ou 2, dans laquelle au moins une composition de verre comprend du TiO₂.

9. Fibre de verre selon la revendication 1 ou 2, dans laquelle au moins une composition de verre comprend du Fe₂O₃.

10. Elément isolant (30) en fibres de verre, comprenant un ensemble de fibres de verre selon l'une quelconque des revendications 1 à 9.
